Europäisches Patentamt

European Patent Office

Office européen des brevets

(19)

(11) Publication number: **0 012 735**
**B1**

(12)

## EUROPEAN PATENT SPECIFICATION

(45) Date of publication of patent specification: **14.09.83**

(21) Application number: **79850106.0**

(22) Date of filing: **03.12.79**

(51) Int. Cl.³: **G 01 S 13/66, G 01 S 7/46,
F 41 G 3/06, G 06 F 15/56**

(54) A method and apparatus for target tracking.

(30) Priority: **15.12.78 SE 7812913**

(43) Date of publication of application:
**25.06.80 Bulletin 80/13**

(45) Publication of the grant of the patent:
**14.09.83 Bulletin 83/37**

(84) Designated Contracting States:
**DE FR GB IT NL**

(56) References cited:
**DE - B - 1 271 415
US - A - 3 648 286
US - A - 3 766 826
US - A - 3 798 420**

(73) Proprietor: **TELEFONAKTIEBOLAGET L M
ERICSSON
S-126 25 STOCKHOLM (SE)**

(72) Inventor: **Gustafsson, Ralf Christer
Lärkträdsvägen 18
S-530 81 Billdal (SE)**
Inventor: **Lundin, Kjell Ake
Rullharvsgatan 2 D
S-431 40 Mölndal (SE)**

(74) Representative: **Biriell, Gustav et al,
Telefonaktiebolaget L M Ericsson
S-126 25 Stockholm (SE)**

Courier Press, Leamington Spa, England.

A method and apparatus for target tracking

## Field of invention

The present invention relates to a method for controlling target tracking and apparatus for carrying out the method.

## Description of prior art

In controlling target tracking, for example when controlling a sighting means for aiming a weapon on a moving target, it is known to the art to use rate control together with distance increments, see for example SE—C—153 244, especially Figure 4 and the description applicable thereto. Target tracking is often carried out by an aimer who aims the sight laterally and in height. Up to now it has been usual, in the operation of the sighting means, that the quotient between distance and velocity increments has been a constant, which has the dimension of time and has therefore been called the Time constant T. Different target tracking tasks require different settings of said quotient. When tracking a rapid target at a short distance with an anti-aircraft weapon sight a low value of the Time constant T must be set, but when controlling a tracking mark in tracking targets on a radar Plan Position Indicator (PPI) where the targets only move slowly, setting to a considerably larger value is required. It is obvious to make said quotient settable to the value suitable for every task and for every aimer. However, it is rather difficult to select the setting value most suitable for every occasion.

In DE—B—1271415 a kind of tracking device is described where measurements of tracking errors are made at constant time intervals and differences in delay in correcting the error are accounted for by changing amplification of an amplifier in a part of the control circuit of the tracking device.

## Summary of the invention

In accordance with the present invention, the time is measured between each correction made by the aimer, and the velocity increment shall be in direct proportion to the distance increment introduced and in inverse proportion to the measured time. For example, when tracking a target on the PPI of a radar installation, a joystick is used for controlling a tracking mark longitudinally and transversely, and when a set correction is to be introduced into the computing portion of the tracking means, this is ordered by the aimer. The distinguishing features for the invention are set forth in the characterizing portion of the accompanying patent claims.

## Brief description of the drawings

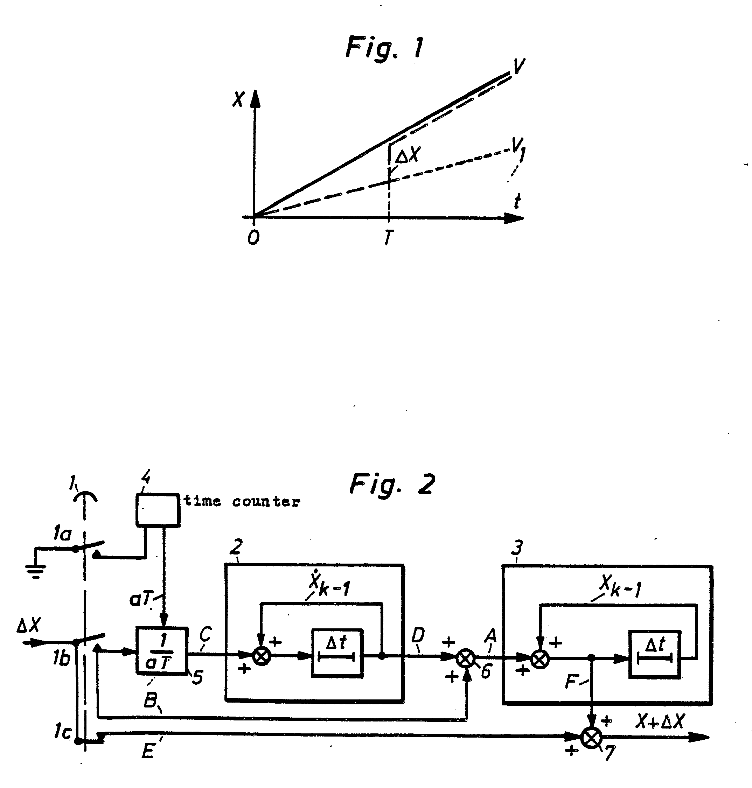

In the following there is described an example of the method for target tracking, and apparatus for carrying out the method, where the calculations for said tracking are done digitally. The appended figures are referred to in the description, where Figure 1 is a time diagram over the tracking sequence and Figure 2 is a principle diagram of the apparatus circuitry.

## Preferred embodiment

The description primarily refers to tracking a moving target on the PPI of a radar installation. A tracking mark on the indicator, which is to be placed over the target and accompany it, is movable along the X- and Y-axes. Controlling the mark is done in the same way in both directions, and it is therefore sufficient solely to describe controlling along the X-axis hereinafter.

The principle for correcting the movement of the controlled tracking mark is apparent from the time diagram in Figure 1. At time zero the tracking mark and the tracked target coincide. The target moves with the velocity V, but the mark is set for a deviating velocity $V_1$. After a time T the aimer carries out a positional correction, here called the distance increment $\Delta X$, to cause the tracking mark to coincide with the target. For the tracking mark to accompany the target after correction, the set velocity of the tracking mark shall also be changed from $V_1$ to V, simultaneously as the tracking mark is given the distance increment $\Delta X$, the quotient between the distance increment and velocity change will be precisely T, which is the time from one instant when the mark coincided with the target to the point of time where a new correction is made.

Experience from previously executed apparatus for target tracking shows that when the target is a fast airplane at a short distance from the sighting means, the time between corrections is of the order of magnitude 0,5 seconds, whereas when target tracking is done on a radar indicator, the time between corrections can vary within the region of 1—30 seconds depending on the indicator distance range, target speed etc.

In the described example, the radar installation used as an aid for tracking is provided with computing means for the movements along the X- and Y-axes, the computing means for the movements along the X-axis being shown in Figure 2. During the process of target tracking, a correction in the form of a distance increment $\Delta X$ is introduced with the help of a joystick. The correction signal is introduced into the calculation on depressing a press button 1 controlling reversing contacts 1a, b, c. The contacts are actually controlled by relays (not shown). In the computing means there are two delaying and addition units 2 and 3, denoted as computing units hereinafter, for the sake of simplicity. The time lag elements in these have a time lag $\Delta t$ in the order of magnitude of 0,03 seconds, which is synonymous with the calculations in the computer portion being repeated with a time interval equal to said time lag. A fed-in numerical value is added at each calculating occasion, e.g. at A to the latest available delayed numerical value. Both said computing units 2 and 3 are thus integrators.

The time T which passes from the latest button push is measured in a time counter 4 which is adapted for zeroing by the contact 1a at the push button 1, and a signal aT is sent where a is a scale factor.

A dividing means 5 is adapted to divide the value of the distance increment $\Delta X$ by aT from the time counter 4 when the push-button is depressed.

The distance increment $\Delta X$ fed in is also taken to an adder 6 for adding to the numerical value at the output of the first computing unit 2.

When the push-button is released, the input value $\Delta X$ is fed via the contact 1c to a second adder 7 to be added to the numerical value at F on the output of the second computing unit 3.

When the push-button 1 is released and both contacts 1a and 1b are thus open, the calculation values at B and C in the Figure are zero. A numerical value $\dot{X}_{k-1}$ at D, representing the speed of the tracking mark is fed back to the input of the time lag circuit in the first computing unit 2, after adding the value on the input side at C. Since the value on the side is zero, the numerical value applied to the computing unit 2 is not altered, and it can therefore be regarded as a register storing the value of the already calculated tracking mark velocity.

The same value as at D occurs at A in the figure, since the numerical value at B is zero.

The output value $X_{k-1}$ in the time delay circuit in the second computing unit 3, which represents the position of the guiding mark, is fed back to the input of the time delay circuit and added there to the numerical value at A, which signifies the speed of the tracking mark. A value signifying the position of the tracking mark is altered every time the addition is carried out by an amount responsive to the set speed $\dot{X}_{k-1}$; the numerical value at the time lag circuit input and the output of the computer circuit 3 at F is therefore changed at a constant rate.

The computing means functions such that if the linearly variable signal at F does not lead the tracking mark straight over the target, corrections in the form of additional signals $\Delta X$ at E, which give the distance increment to the tracking mark movement, are added in the second adder 7 to the output signal. When the distance increment has been set to the right value, i.e. the tracking mark has been superposed on the target, the switch 1 is reversed, resulting in the reversal of its contacts. When the contacts reverse, the signal at E will be zero. The same signal now occurs instead at B, due to the closure of contact 1b. After passing the adding point 6 and the computing unit, it gives an increment to the signal at F, so that the output signal $X+\Delta X$ will be unchanged when the button is depressed. The increment at B only exists during one calculation interval and is thereafter put equal to zero; it thus being achieved that the signal at F is only given a jump increment.

The time has been measured from the nearest preceding button depression in the time counter 4; the measured value of the time T is fed out when the contact 1a is reversed, and the time counter is zeroed for a new time count. The input value $\Delta X$ is divided by aT in the computing unit 5 so that the signal at C is given the value $\Delta X/aT$. This value of the signal at C is added to the value of the velocity $\dot{X}_{k-1}$ circulating in the computing unit 2, to give a new value of the velocity. The addition is only carried out during one calculation interval, the signal at C subsequently being set to zero; the value of the velocity is thereby altered in jumps but stays at the new value.

The new value of the velocity also occurs at D and at A.

The new value of the velocity at A is added in the computing unit 3 for each calculating interval $\Delta t$ to a new output value at F. The output values $X+\Delta X$ will thus be added by a small increment for each calculation interval $\Delta t$, the magnitude of the increment being determined by the signal at A, but since the calculating interval $\Delta t$ is very short, the tracking mark controlled by the output signal will appear to move at a constant rate.

Tracking is continued with the set velocity until the tracking mark appears to deviate from the target, which can be due to the speed of the tracking mark not having been correctly set or to the velocity of the target along the X-axis having been altered. To begin with, the correction is introduced only as a distance increment to the adder 7 without depressing the push-button 1, and when the deviation becomes such that the joystick movement becomes considerable, the push-button 1 is depressed causing a new velocity correction to be calculated and carried out in the mode just described.

The scale factor a incorporated in the division in the computing unit 5 should be set at 1, due to what has previously been said concerning the relationship between the distance increment and change in velocity. To achieve the best filtration of disturbances, and so that capturing the target will be facilitated, it is however suitable to select a greater scale factor than 1.

The calculation signals are all numerical values in what has been described hereinbefore, but the same apparatus can be made with the calculation values being represented by analogue electrical voltages or currents.

Apart from radar, the described method and the described apparatus are secondarily to be considered with respect to a sighting means where the presentation means is an optical telescope and the driving means are motors for adjusting the direction of the telescope.

## Claims

1. A method of controlling a sighting means provided with a manoeuvering means, a computing means (2, 3, 5, 6, 7), a driving means and a display means, for tracking a moving target, in which method there are the following procedural steps:

— changing the setting ($\Delta$X) of the manoeuvering means in response to deviation shown on the display means between the attitude of the sighting means and the position of the target,

— calculation in the computing means of both the positional increment and the velocity increment of the sighting means which are necessary to substantially realign the sighting means and the target in dependence upon the change in said setting ($\Delta$X), where the quotient of the increments signifies a time constant,

— steering the sighting means with the aid of its driving means to step to the calculated position and to move from there with the calculated velocity, characterized in

— introducing the velocity increment in the calculation by pushing a switch (1) at an arbitrarily selectable and measured time interval (T) from the preceding pushing of the switch,

— choosing as the time constant the measured time interval (T).

2. Apparatus for carrying out the method in accordance with claim 1, for controlling a sighting means provided with a manoeuvering means, a computing means (2, 3, 5, 6, 7), a driving means and a display means, for tracking a moving target, said manoeuvering means being adapted for emitting a signal ($\Delta$X) to affect both the position of the sighting means and its velocity, characterized by a switch (1) with contacts for sending commands as to the correction of the sighting means velocity on reversal of the switch, and by there being incorporated in the calculating unit:

— a time counter (4) for measuring the time interval (T) between two sequential operations of the switch (1) and for sending an output signal the magnitude (aT) of which is proportional to the measured time interval,

— a dividing means (5) for dividing the manoeuvering means signal ($\Delta$X) by said time counter output signal (aT) to give a quotient signal ($\Delta$X/aT) when the switch (1) is reversed,

— a first time lag and addition unit (2) for integrating the quotient signal,

— an adder (6) for adding the output signal of the first time lag and addition unit (2) to the input signal ($\Delta$X) from the manoeuvering means, when the switch is reversed,

— a second time lag and addition unit (3) for integrating the output signal from the adder (6) and

— a second adder (7) for adding the output signal of the second time lag and addition unit (3) to the input signal ($\Delta$X) from the manoeuvering means when the switch is unactuated to form a signal (X+$\Delta$X) for controlling the driving means.

## Revendications

1. Procédé de commande d'un moyen de visée équipé d'un moyen de manoeuvre, d'un moyen de calcul (2, 3, 5, 6, 7), d'un moyen d'entraînement et d'un moyen d'affichage, pour la poursuite d'une cible en mouvement, lequel procédé comprend les étapes suivantes qui consistent:

— à changer le réglage ($\Delta$X) du moyen de manoeuvre en réponse à une déviation apparaissant sur le moyen d'affichage entre l'attitude du moyen de visée et la position de la cible,

— à calculer dans le moyen de calcul à la fois l'incrément de position et l'incrément de vitesse du moyen de visée, qui sont nécessaires pour réaligner sensiblement le moyen de visée et la cible en fonction du changement dudit réglage ($\Delta$X), dans lequel le quotient des incréments signifie une constante de temps,

— à diriger le moyen de visée à l'aide de son moyen d'entraînement pour faire un pas à la position calculée et pour s'en éloigner à la vitesse calculée, caractérisé en ce qu'il consiste à

— introduire l'incrément de vitesse dans le calcul en appuyant sur un commutateur (1) à un intervalle de temps mesuré et pouvant être choisi arbitrairement (T) à partir de la poussée précédente sur le commutateur,

— à choisir comme constante de temps l'intervalle de temps mesuré (T).

2. Appareil pour la mise en oeuvre du procédé selon la revendication 1, pour commander un moyen de visée équipé d'un moyen de manoeuvre, d'un moyen de calcul (2, 3, 5, 6, 7), d'un moyen d'entraînement et d'un moyen d'affichage, pour la poursuite d'une cible en mouvement, ledit moyen de manoeuvre étant conçu pour émettre un signal ($\Delta$X) afin d'affecter à la fois la position du moyen de visée et sa vitesse, caractérisé par un commutateur (1) comportant des contacts destinés à émettre des ordres concernant la correction de la vitesse du moyen de visée lors d'une inversion du commutateur, et par le fait que l'unité de calcul renferme:

— un compteur de temps (4) destiné à mesurer l'intervalle de temps (T) entre deux manoeuvres successives du commutateur (1) et à émettre un signal de sortie dont l'amplitude (aT) est proportionnelle à l'intervalle de temps mesuré,

— un moyen de division (5) destiné à diviser le signal ($\Delta$X) du moyen de manoeuvre par ledit signal (aT) de sortie du compteur de temps pour donner un signal de quotient ($\Delta$X/aT) lorsque le commutateur (1) est inversé,

— une première unité (2) de temporisation et d'addition destinée à intégrer le signal de quotient,

— un additionneur (6) destiné à additionner le signal de sortie de la première unité (2) de temporisation et d'addition au signal d'entrée ($\Delta$X) provenant du moyen de manoeuvre, lorsque le commutateur est inversé,

— une seconde unité (3) de temporisation et d'addition destinée à intégrer le signal de sortie provenant de l'additionneur (6) et

— un second additionneur (7) destiné à additionner le signal de sortie de la seconde unité (3) de temporisation et d'addition au signal d'entrée ($\Delta$X) provenant du moyen de manoeuvre lorsque le commutateur n'est pas actionné afin de former un signal (X+$\Delta$X) pour la commande du moyen d'entraînement.

**Patentansprüche**

1. Verfahren zum Steuern einer Beobachtungseinrichtung, die für die Verfolgung eines beweglichen Ziels mit einer Manövriereinrichtung, einer Recheneinrichtung (2, 3, 5, 6, 7), Antriebsmitteln und einer Anzeigevorrichtung versehen ist, omfassend folgende Schritte:

Es wird die Einstellung ($\Delta$X) der Manövriereinrichtung aufgrund einer Abweichung verändert, die auf der Anzeigevorrichtung zwischen der Einstellung der Beobachtungseinrichtung und der Position des Ziels dargestellt ist;
in der Recheneinrichtung werden sowohl der Positionsschritt als auch der Geschwindigkeitsschritt der Beobachtungseinrichtung berechnet, die für die Wiederausrichtung der Beobachtungseinrichtung auf das Ziel abhängig von der Änderung der Einstellung ($\Delta$X) nötig sind, wobei der Quotient aus den Schritten eine Zeitkonstante bezeichnet;
die Beobachtungseinrichtung wird mit Hilfe der Antriebsmittel so gesteuert, daß sie in die berechnete Position übergeht und sich von dieser aus mit der berechneten Geschwindigkeit bewegt;
dadurch gekennzeichnet, daß die Geschwindigkeitsstufe durch Betätigen eines Schalters (1) an einem beliebig wählbaren und bemessenen Zeitintervall (T), ausgehend vom vorhergehenden Betätigen des Schalters, eingeführt wird, und daß als Zeitkonstante das bemessene Zeitintervall (T) gewählt wird.

2. Vorrichtung zur Durchführung des Verfahrens nach Anspruch 1 für das Steuern einer Beobachtungseinrichtung, die mit einer Manövriereinrichtung, einer Recheneinrichtung (2, 3, 5, 6, 7), Antriebsmitteln und einer Anzeigevorrichtung ausgestattet ist, um ein sich bewegendes Ziel zu verfolgen, wobei die Manövriereinrichtung ein Signal ($\Delta$X) abzugeben vermag, um sowohl die Position der Beobachtungseinrichtung als auch ihre Geschwindigkeit zu beeinflussen, dadurch gekennzeichnet, dass die Vorrichtung einen Schalter (1) mit Kontakten für die Abgabe von Befehlen für die Korrektur der Beobachtungseinrichtungsgeschwindigkeit beim Umlegen des Schalters umfasst, und dadurch, daß in der Recheneinrichtung enthalten sind:

Ein Zeitzähler (4) zum Messen des Zeitintervalls (T) zwischen zwei aufeinanderfolgenden Betätigungen des Schalters (1) und zur Abgabe eines Ausgangssignals, dessen Größe (aT) proportional zum gemessenen Zeitintervall ist, Teilermittel (5) zum Teilen des Manövriereinrichtungssignals ($\Delta$X) durch das Zeitzählerausgangssignal (aT), um ein Quotientensignal ($\Delta$X/aT) zu bilden, wenn der Schalter (1) umgelegt wird, eine erste Zeitverzögerungs- und Additionseinheit (2) zum Integrieren des Quotientensignals, ein Addierer (6) zum Addieren des Ausgangssignals der ersten Zeitverzögerungs- und Additionseinheit (2) zum Eingangssignal ($\Delta$X) von der Manövriereinrichtung, wenn der Schalter umgelegt wird, eine zweite Zeitverzögerungs- und Addiereinheit (3) zum Integrieren des Ausgangssignals vom Addierer (6) und einen zweiten Addierer (7) zum Addieren des Ausgangssignals der zweiten Zeitverzögerungs- und Addiereinheit (3) zum Eingangssignal ($\Delta$X) von der Manövriereinrichtung, wenn der Schalter unbetätigt bleibt, wodurch ein Signal (X+$\Delta$X) zur Steuerung der Antriebsmittel erzeugt wird.

# Fig. 1

# Fig. 2